# EUROPÄISCHE PATENTSCHRIFT

(11) **EP 0 607 417 B1**
(45) Veröffentlichungstag und Bekanntmachung des Hinweises auf die Patenterteilung: **06.11.1996**
(21) Anmeldenummer: 93918895.9
(22) Anmeldetag: 18.08.1993
(51) Int. Cl.: B60B 3/14

(54) **ANORDNUNG ZUR VERMEIDUNG VON KONTAKTKORROSIONEN BEI MAGNESIUMRÄDERN**
ARRANGEMENT FOR PREVENTING CONTACT CORROSION IN MAGNESIUM WHEELS
AGENCEMENT PREVENANT LA CORROSION PAR CONTACT DANS DES ROUES EN MAGNESIUM

(30) Priorität: 18.08.1992 DE 4227259
(43) Veröffentlichungstag der Anmeldung: 27.07.1994
(73) Patentinhaber: STAHLSCHMIDT & MAIWORM GmbH, D-67098 Bad Dürkheim (DE)
(72) Erfinder: MAIWORM, Friedhelm, D-58791 Werdohl (DE); PFORR, Hans-Joachim, D-58809 Neuenrade (DE)
(74) Vertreter: Preissner, Nicolaus, Dipl.-Ing.
(86) Internationale Anmeldenummer: DE9300752
(87) Internationale Veröffentlichungsnummer: WO9404379

(56) Entgegenhaltungen:
- DE-A- 2 207 771
- PATENT ABSTRACTS OF JAPAN vol. 017, no. 248 (M-1411)18. Mai 1993 & JP,A,04 368 202 (HONDA) 21. Dezember 1992
- PATENT ABSTRACTS OF JAPAN vol. 007, no. 116 (M-216)20. Mai 1983 & JP,A,58 036 701 (TOYOTA) 3. März 1983

## Beschreibung

Die Erfindung bezieht sich auf eine Anordnung zur Vermeidung von Kontaktkorrosionen bei der Befestigung eines Magnesiumrades an der Radanlage eines Kraftfahrzeuges.

Bei hochwertigen Personenkraftwagen sind in zunehmendem Maße die die Reifen tragenden Räder aus Leichtmetall gefertigt, um damit eine Gewichtsersparnis der ungefederten Massen und eine Verbesserung des Fahrkomforts zu erreichen. Für derartige Räder ist bisher überwiegend Aluminium eingesetzt worden. Ein noch leichteres Gewicht und damit eine weitere Herabsetzung der ungefederten Massen ergibt sich jedoch bei der Verwendung von Magnesium für diese Räder.

Derartige Räder werden üblicherweise an den Radanlagen der Fahrzeugachsen festgeschraubt, wobei derartige Radträger aus Stahl oder Stahlguß bestehen.

Bei direktem Kontakt von Magnesium und Stahl kann es jedoch zu sog. Rontaktkorrosionen kommen, die das Metallgittergefüge des Magnesiumrades nachhaltig stören können, so daß die Haltbarkeit eines solchen aus Magnesium gefertigten Rades vermindert werden kann.

Um solche Kontaktkorrosionen zu vermeiden, ist es aus der DE 22 07 771 A1 bekannt, entsprechende Schraublöcher in diesen Rädern gegen die durchgeführten Stahlschrauben dadurch zu schützen, daß die Bohrungen mit Aluminium ausgekleidet werden.

Ausgehend hiervon liegt der Erfindung die Aufgabe zugrunde, eine Anordnung zu schaffen, mit der ein direkter Kontakt von Magnesium und Stahl vermieden wird, mit dem aber keinerlei Einschränkungen der Festigkeit der Verbindung zwischen dem Magnesiumrad und der Radanlage am Fahrzeug verbunden sind.

Zur Lösung dieser Aufgabe wird erfindungsgemäß eine Anordnung zur Vermeidung von Kontaktkorrosionen zwischen Magnesium und Stahl bei der Befestigung eines Magnesiumrads an der Radanlage eines Kraftfahrzeugs mit den Merkmalen des Anspruchs 1 vorgeschlagen.

Mit einer derartigen Zwischenschaltung einer Aluminiumscheibe zwschen dem Magnesiumrad und der Stahl-Radanlage im Bereich wesentlicher Pressungen wird somit ein direkter Kontakt zwischen Magnesium und Stahl vermieden, da Kontaktkorrosionen zwischen Magnesium und Aluminium einerseits sowie Aluminium und Stahl andererseits praktisch ausgeschlossen sind. Die übrigen, nicht belasteten Kontaktbereiche zwischen Magnesiumrad und Radanlage sind durch eine ausreichende Druckfestigkeit aufweisende Kunststoffteile getrennt.

Zweckmäßig ist es dabei, wenn die Distanzscheibe achsparallele Bohrungen entsprechend den Befestigungsbohrungen des Magnesiumrads sowie eine zum Magnesiumrad sich konisch verengende Innenumfangsfläche aufweist, an die die sich entsprechend konisch erweiternde Außenumfangsfläche des Kunststoffadapters anliegt.

Ferner ist es zweckmäßig, wenn mindestens eine der Bohrungen der Distanzscheibe auf ihrer Anlageseite zum Magnesiumrad eine Senkung aufweist und daß in diese Bohrung eine Zentrierhülse mit einem mittig radial abragenden Bund derart eingesetzt ist, daß der Bund die Senkung voll ausfüllt und mit der Planfläche der Distanzscheibe abschließt.

Weitere vorteilhafte Ausgestaltungen der Erfindung sind in den sich anschließenden Unteransprüchen 4 bis 8 beschrieben.

Anhand einer schematischen Zeichnung sind Aufbau und Funktionsweise eines Ausführungsbeispieles nach der Erfindung näher erläutert. Dabei zeigen
- Fig. 1: einen Längsschnitt durch ein fertig montiertes Magnesiumrad,
- Fig. 2: eine perspektivische, auseinandergezogene Ansicht von Adapter, Distanzscheibe und Zentrierhülse und
- Fig. 3: einen vergrößerten Teilschnitt im Bereich einer Befestigungsschraube durch das Magnesiumrad.

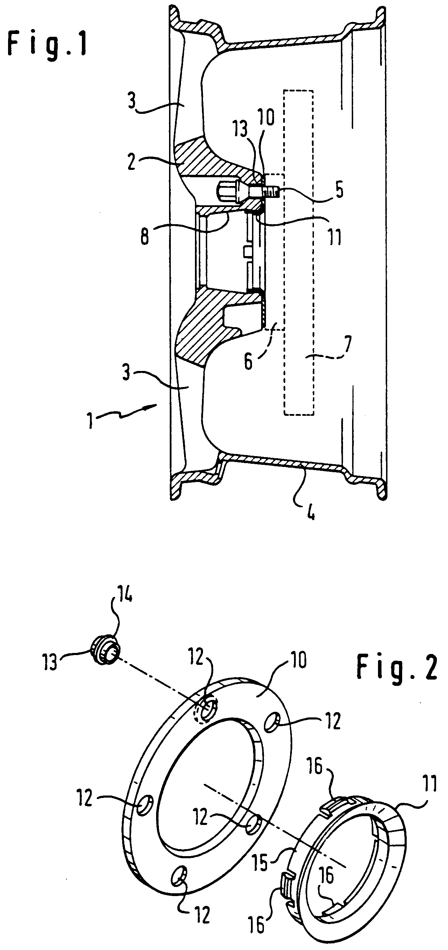

In Fig. 1 ist zunächst ein Querschnitt durch ein Magnesium-Scheibenrad 1 mit Nabe 2, Speichen 3 und Felgenbett 4 zur Aufnahme des nicht näher dargestellten Reifens gezeigt. Dieses Magnesiumrad ist im Bereich der Nabe 2 über entsprechende Schrauben 5 mit der gestrichelt eingezeichneten Radanlage 6 außenliegend zur ebenfalls gestrichelt angedeuteten Bremsscheibe 7 verbunden. Zwischen dem Magnesiumrad 1 und der Radanlage 6 ist nunmehr im Bereich der Schrauben 5 eine ringförmige Aluminium-Distanzscheibe 10 angeordnet, die radial innenliegend von einem in die Nabenbohrung 8 eingeklemmten Kunststoffadapter 11 zentriert ist.

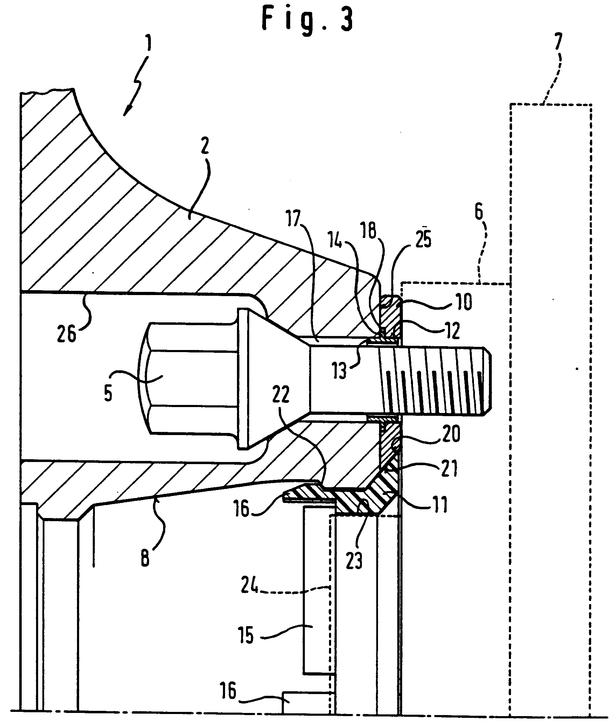

In Fig. 2 sind die Einzelteile zur Verhinderung einer Kontaktkorrosion in perspektivischer Ansicht im auseinandergezogenen Zustand noch einmal dargestellt, deren Querschnitte sich im einzelnen aus dem vergrößerten Teilquerschnitt nach Fig. 3 ergeben. Wie man aus Fig. 2 ersieht, weist die Aluminium-Distanzscheibe 10 fünf koaxiale Bohrungen 12 auf, die mit den entsprechenden Bohrungen in der Nabe für die Befestigungsschrauben fluchten. Zum Einsatz in einer dieser Bohrungen 12 ist die Zentrierhülse 13 vorgesehen, deren Funktion noch später erläutert wird.

Der Adapter 11 aus Kunststoff weist im hinteren zylindrischen Bereich 15 vier freigeschnittene Rastnasen 16 zur Arretierung in der Radnabe auf.

Wie man dazu aus dem vergrößerten Querschnitt nach Fig. 3 ersieht, weist der zwischen der Nabe 2 des Magnesiumrades 1 und der Radanlage 6 eingelegte Distanzring 10 aus Aluminium Bohrungen 12 auf, deren Durchmesser genau den Bohrungen 17 in der Radnabe 2 entspricht.

In eine der Bohrungen 12 der Distanzscheibe 10 ist eine zylindrische Zentrierhülse 13 eingesetzt, die mittig einen radial abragenden Bund 14 aufweist, der in eine Senkung 18 auf der radseitigen Stirnfläche der Distanzscheibe 10 eingreift. Diese Zentrierhülse 13 wird somit in der Distanzscheibe 10 gehaltert und erstreckt sich in die Bohrung 17 der Radnabe 2, um damit die Distanzscheibe 10 genau auszurichten.

Der Innenumfang der Distanzscheibe 10 weist eine sich zum Magnesiumrad 1 konisch verengende Umfangsfläche 20 auf, an der direkt die sich entsprechend konisch erweiternde Außenumfangsfläche 21 des Kunststoffadapters 11 anlegt. Dieser Kunststoffadapter 11 ragt mit seinem zylindrischen Bereich 15 in die Nabenbohrung 8 und hat - wie man insbesondere aus der perspektivischen Ansicht nach Fig. 2 ersieht - vom zylindrischen Bereich 15 freigeschnittene und geringfügig länger ausgebildete Rastnasen 16, die in eine radiale Erweiterung 22 in der Nabenbohrung 8 einrasten.

Mit seinem Innendurchmesser 23 sitzt der Kunststoffadapter 11 genau auf dem Außenumfang des gestrichelt dargestellten Zentrieransatzes 24 der Radanlage 6 an.

Die Montage der Einzelteile, Distanzscheibe 10 und Adapter 11 am Magnesiumrad 1 erfolgt dabei zweckmäßigerweise wie folgt: Zunächst wird die Zentrierhülse 13 in die die Senkung 18 aufweisende Bohrung 12 der Distanzscheibe 10 eingedrückt und zwar so, daß der Bund 14 die Planfläche 25 der Distanzscheibe 10 nicht überragt.

Anschließend wird das Magnesiumrad 1 mit seiner Sichtseite nach unten auf den Boden gelegt und die Zentrierhülse 13 zusammen mit der Distanzscheibe 10 in eine der Bohrungen 17 der Radnabe 2 eingesetzt. Anschließend wird die Distanzscheibe 10 so gedreht, daß alle Bohrungen 12 der Distanzscheibe 10 mit den Bohrungen 17 der Nabe 2 fluchten.

Anschließend wird der Kunststoffadapter 11 durch die zentrale Öffnung 20 der Distanzscheibe 10 gedrückt bis die Rastnasen 16 hörbar in der Nabenbohrung 8 einrasten. Damit ist dann eine genaue Zentrierung und Halterung der Distanzscheibe 10 gegenüber dem Magnesiumrad 1 gegeben. Anschließend werden über entsprechende erweiterte Sacklochbohrungen 26 von der Außenseite des Magnesiumrades 1 her Kegelbundschrauben 5 aus Titan eingeführt und damit das Rad 1 gegen die Radanlage 6 verschraubt.

Die Distanzscheibe 10 weist zweckmäßigerweise eine Dicke von etwa 3 bis 5 mm auf und ist aus einem druckfesten Aluminium gefertigt, das keine Kontaktkorrosionen zum Magnesium des Rades und zum Stahl der Radanlage aufweist.

Der Adapter 11 besteht zweckmäßigerweise aus glasfaserverstärktem Polyamid und weist damit ebenfalls eine hohe Festigkeit auf. Aus gleichem Material kann auch die Zentrierhülse 13 hergestellt sein.

Mit der beschriebenen Anordnung und den entsprechend gestalteten Einzelteilen ist es also auf einfache Weise möglich, bei der Verwendung eines Scheibenrades aus Magnesium Kontaktkorrosionen zur Radanlage aus Stahl sicher zu vermeiden, da alle möglichen Berührungsflächen durch Aluminium im Druckbereich und Kunststoff im reinen Formschlußbereich voneinander getrennt sind.

## Patentansprüche

1. Anordnung zur Vermeidung von Kontaktkorrosionen bei der Befestigung eines Magnesiumrades an der Radanlage eines Kraftfahrzeuges, dadurch gekennzeichnet, daß zwischen der innenseitigen Anlagefläche des Magnesiumrades (1) und der Radanlagefläche (6) im Bereich der Befestigungsbohrungen (17) eine ringförmige Distanzscheibe (10) aus Aluminium eingefügt ist und daß als Mittenzentrierung in die Nabenbohrung (8) des Magnesiumrades (1) ein ringförmiger Adapter (11) aus Kunststoff eingeklemmt ist, der die radial innenliegende Umfangsfläche (20) der Distanzscheibe (10) abdeckt und diese zentriert.

2. Anordnung nach Anspruch 1, dadurch gekennzeichnet, daß die Distanzscheibe (10) achsparallele Bohrungen (12) entsprechend den Befestigungsbohrungen (17) des Magnesiumrades (1) sowie eine zum Magnesiumrad (1) hin sich konisch verengende Innenumfangsfläche (20) aufweist, an die die sich entsprechend konisch erweiternde Außenumfangsfläche (21) des Kunststoff-Adapters (11) anliegt.

3. Anordnung nach Anspruch 2, dadurch gekennzeichnet, daß mindestens eine der Bohrungen (12) der Distanzscheibe (10) auf ihrer Anlageseite (25) zum Magnesiumrad (1) eine Senkung (18) aufweist und daß in diese Bohrung (12) eine Zentrierhülse (13) mit einem mittig radial abragenden Bund (14) derart eingesetzt ist, daß der Bund (14) die Senkung (18) voll ausfüllt und mit der Planfläche (25) der Distanzscheibe (10) abschließt.

4. Anordnung nach Anspruch 1 und 2, dadurch gekennzeichnet, daß der Kunststoff-Adapter (11) einen zylindrischen Abschnitt (15) mit mehreren, axial freigeschnittenen Rastnasen (16) und einen daran anschließenden, sich am Innen- und Außenumfang konisch erweiternden Abschnitt mit Innendurchmessern (23) entsprechend dem Außendurchmesser des Zentrieransatzes (24) der Radanlage (6) aufweist.

5. Anordnung nach Anspruch 4, dadurch gekennzeichnet, daß die Nabenbohrung (8) des Magnesiumrades (1) mit einer radialen Erweiterung (22) versehen ist, in die die Rastnasen (16) des Adapters (11) einrasten.

6. Anordnung nach Anspruch 4, dadurch gekennzeichnet, daß der Kunststoff-Adapter (11) aus glasfaserverstärktem Polyamid besteht.

7. Anordnung nach Anspruch 1, dadurch gekennzeichnet, daß die Aluminium-Distanzscheibe (10) eine Dicke von etwa 3 bis 5 mm aufweist.

8. Anordnung nach Anspruch 3, dadurch gekennzeichnet, daß die Zentrierhülse (13) einen geringfügig größeren Innendurchmesser als dem Außendurchmesser der Befestigungsschrauben (5) und einen Außendurchmesser entsprechend den Bohrungsdurchmessern (12, 17) in der Distanzscheibe (10) und dem Magnesiumrad (1) für die Befestigungsschrauben (5) aufweist.

## Claims

1. An arrangement for preventing contact corrosion in securing a magnesium wheel to the wheel mount of a motor vehicle, characterized in that an annular, aluminum spacer washer (10) is inserted between the inner contact face of said magnesium wheel (1) and said wheel mount (6) in the region of the bolting holes (17) and in that as a centering means an annular plastics adapter (11) is pressed into the hub bolting hole (8) of said magnesium wheel (1), covering the radially inner circumferential face (20) of said spacer washer (10) and centering same.

2. The arrangement as set forth in claim 1, characterized in that said spacer washer (10) comprises axially parallel holes (12) corresponding to said bolting holes (17) of said magnesium wheel (1) and an inner circumferential face (20) which tapers conically towards said magnesium wheel (1) and on which the correspondingly conically flared outer circumferential face (21) of said plastics adapter (11) bears.

3. The arrangement as set forth in claim 2, characterized in that at least one of said holes (12) in said spacer washer (10) comprises on its contact side (25) with said magnesium wheel (1) a countersunk depression (18) and in that a centering bush (13) having a centrally, radially projecting collar (14) is inserted into said hole (12) such that said collar (14) completely fills said countersunk depression (18) and is flush with the planar face (25) of said spacer washer (10).

4. The arrangement as set forth in claim 1 and 2, characterized in that said plastics adapter (11) comprises a cylindrical section (15) including a plurality of axially punched locking tabs (16) and an adjoining section conically flared on the inner and outer circumference having inner diameters (23) corresponding to the outer diameter of the centering raised face (24) of said wheel mount (6).

5. The arrangement as set forth in claim 4, characterized in that said hub bolting hole (8) of said magnesium wheel (1) is provided with a radial flare (22) in which said locking tabs (16) of said plastics adapter (11) engage.

6. The arrangement as set forth in claim 4, characterized in that said plastics adapter (11) consists of a glass-fiber reinforced polyamide.

7. The arrangement as set forth in claim 1, characterized in that said spacer washer (10) has a thickness of 3 to 5 mm.

8. The arrangement as set forth in claim 3, characterized in that said centering bush (13) has an inner diameter slightly larger than the outer diameter of said fastener bolts (5) and an outer diameter corresponding to the hole diameters (12, 17) in said spacer washer (10) and said magnesium wheel (1) for said fastener bolts (5).

## Revendications

1. Agencement destiné à éviter des corrosions par contact lors de la fixation d'une roue en magnésium sur le support de roue d'un véhicule automobile, caractérisé en ce qu'un disque d'écartement annulaire (10) en aluminium est mis en place entre la surface d'appui côté intérieur de la roue en magnésium (1) et la surface de support de roue (6) dans la région des perçages de fixation (17), et en ce qu'en tant que moyen de centrage dans le perçage de moyeu (8) de la roue en magnésium (1) est serré un adaptateur annulaire (11) en matière plastique qui recouvre la surface périphérique radialement intérieure (20) du disque d'écartement (10) et qui centre celle-ci.

2. Agencement selon la revendication 1, caractérisé en ce que le disque d'écartement (10) présente des perçages (12) parallèles à l'axe en correspondance des perçages de fixation (17) de la roue en magnésium (1), ainsi qu'une surface périphérique intérieure (20) en rétrécissement conique vers la roue en magnésium (1), contre laquelle s'appuie la surface périphérique extérieure (21) en élargissement conique correspondante de l'adaptateur en matière plastique (11).

3. Agencement selon la revendication 2, caractérisé en ce que l'un au moins des perçages (12) du disque d'écartement (10) présente sur sa face d'appui (25) vers la roue en magnésium (1) une dépression (18), et en ce que dans ce perçage (12) est mise en place une douille de centrage (13) présentant un collier (14) au centre en dépassement radial, de telle sorte que le collier (14) remplit entièrement la dépression (18) et se termine avec la surface plane (25) du disque d'écartement (10).

4. Agencement selon l'une ou l'autre des revendications 1 et 2, caractérisé en ce que l'adaptateur en matière plastique (11) présente un tronçon cylindrique (15) présentant plusieurs doigts d'enclenchement découpés axialement (16) et un tronçon qui s'y raccorde, qui s'élargit coniquement à la périphérie intérieure et extérieure et qui présente des diamètres intérieurs (23) en correspondance du diamètre extérieur du talon de centrage (24) du support de roue (6).

5. Agencement selon la revendication 4, caractérisé en ce que le perçage de moyeu (8) de la roue en magnésium (1) est pourvu d'un élargissement radial (22) dans lequel s'enclenchent les doigts d'enclenchement (16) de l'adaptateur (11).

6. Agencement selon la revendication 4, caractérisé en ce que l'adaptateur en matière plastique (11) est constitué en polyamide renforcé avec des fibres de verre.

7. Agencement selon la revendication 1, caractérisé en ce que le disque d'écartement en aluminium (10) présente une épaisseur d'environ 3 à 5 mm.

8. Agencement selon la revendication 3, caractérisé en ce que la douille de centrage (13) présente un diamètre intérieur légèrement supérieur au diamètre extérieur des vis de fixation (5), et en ce qu'elle présente un diamètre extérieur en correspondance des diamètres des perçages (12, 17) dans le disque d'écartement (10) et dans la roue en magnésium (1) pour les vis de fixation (5).
